# EUROPÄISCHE PATENTSCHRIFT

(11) **EP 2 594 172 B1**
(45) Veröffentlichungstag und Bekanntmachung des Hinweises auf die Patenterteilung: **21.08.2013**
(21) Anmeldenummer: 11401634.8
(22) Anmeldetag: 18.11.2011
(51) Int. Cl.: A47J 31/44

(54) **Andockung Milchbehälter**
Docking milk container
Amarrage d'un récipient à lait

(43) Veröffentlichungstag der Anmeldung: 22.05.2013
(73) Patentinhaber: Miele & Cie. KG, 33332 Gütersloh (DE)
(72) Erfinder: Jungclaus, Dirk, 59302 Oelde (DE); Wüstefeld, Michael, 59555 Lippstadt (DE); van Pels, Ulrich, 33378 Rheda-Wiedenbrück (DE)

(56) Entgegenhaltungen:
- WO-A1-01/24671
- WO-A1-2009/027053
- WO-A1-2011/064702

## Beschreibung

Die Erfindung betrifft einen Getränkebereiter als Einbaugerät in einem Küchenschrank nach dem Oberbegriff des Patentanspruches 1.

Derartige Getränkebereiter können beispielsweise Espressomaschinen, Kaffeemaschinen, Kaffeeautomaten, Teebereiter, Saftzentrifugen oder ähnliche Geräte beziehungsweise Kombinationen aus den genannten Geräten sein.

Aus der WO 2009/027053 A1 ist zum Beispiel ein Kaffeeautomat als Getränkebereiter bekannt, der eine Tür aufweist und als Einbaugerät in einem Küchenschrank ausgeführt ist. In die Tür kann dabei ein nach außen sichtbarer Flüssigkeitsbehälter lösbar eingesetzt werden. Ein derartiger Flüssigkeitsbehälter ist beispielsweise mit Milch für die Zubereitung eines aus Kaffee und Milch bestehenden Mischgetränkes gefüllt. Der Flüssigkeitsbehälter des in der WO 2009/027053 A1 offenbarten Getränkebereiters befindet sich jedoch türinnenseitig, sodass die Tür zum Wechsel des Flüssigkeitsbehälters geöffnet werden muss. Auf der Innenseite der Tür ist hierfür zur Aufnahme des Flüssigkeitsbehälters eine Aufnahmevorrichtung vorhanden. Darüber hinaus offenbart die genannte Druckschrift, dass der Flüssigkeitsbehälter von außerhalb des Getränkebereiters sichtbar ist beziehungsweise Teile des Flüssigkeitsbehälters sichtbar sind. Dies hat den Vorteil, dass beispielsweise eine optische Sichtkontrolle des Füllstandes des Flüssigkeitsbehälters erfolgen kann. Als nachteilig hat sich jedoch das Erfordernis erwiesen, zum Austausch des Flüssigkeitsbehälters die Tür öffnen zu müssen, da hiermit ein unerwünschter Aufwand verbunden ist.

Die WO 2011/064702 A1 offenbart einen Getränkebereiter, mit einer frontseitigen Tür, an die ein nach außen sichtbarer Flüssigkeitsbehälter lösbar eingesetzt ist. An der Frontseite ist eine Aufnahmevorrichtung zur Bereitstellung des Flüssigkeitsanschlusses integriert, in die der Flüssigkeitsbehälter eingesetzt werden kann. Zur Fixierung am Gerät ist der Behälter bodenseitig mit Vorsprüngen versehen, die mit am Tropfgitter angebrachten weiteren Vorsprüngen korrespondieren.

Andere, bereits im Einsatz befindliche Getränkebereiter sind noch unbefriedigender in der Handhabung. So ist es beispielsweise üblich, eine Verkaufsverpackung mit Milch neben dem Getränkebereiter aufzustellen und eine Milchleitung in die Verkaufsverpackung zu führen. Hierbei ist keine visuelle Kontrolle des Füllstandes des Flüssigkeitsbehälters möglich. Darüber hinaus ist diese Lösung zeitintensiv, aus hygienischen Gründen bedenklich und es besteht die Gefahr, dass der Flüssigkeitsbehälter während der Vorbereitung oder Verwendung des Getränkebereiters umgestoßen wird. Ein weiterer Nachteil besteht darin, dass für den Flüssigkeitsbehälter ein vom Getränkebereiter unabhängiger Platz zur Verfügung stehen muss.

Der Erfindung stellt sich somit das Problem, einen Getränkebereiter bereitzustellen, bei dem ein zur Bereitung oder Aufbereitung eines Getränkes benötigter Flüssigkeitsbehälter auf einfache Weise in den Getränkebereiter eingesetzt und wieder aus dem Getränkebereiter entnommen werden kann.

Erfindungsgemäß wird dieses Problem durch einen Getränkebereiter mit den Merkmalen des Patentanspruchs 1 gelöst. Vorteilhafte Ausgestaltungen und Weiterbildungen der Erfindung ergeben sich aus den nachfolgenden Unteransprüchen.

Ein Getränkebereiter, der eine Tür aufweist und als Einbaugerät in einem Küchenschrank ausgeführt ist, wobei in die Tür ein nach außen sichtbarer Flüssigkeitsbehälter lösbar eingesetzt werden kann, wurde erfindungsgemäß dahingehend weitergebildet, dass in die Frontseite der Tür des Getränkebereiters eine Aufnahmevorrichtung zum Einsetzen des Flüssigkeitsbehälters integriert ist.

Die mit der Erfindung erreichbaren Vorteile bestehen neben optisch ansprechenden Gestaltungsmöglichkeiten darin, dass die Tür zum Wechsel des Flüssigkeitsbehälters nicht geöffnet und wieder geschlossen werden muss. Der erforderliche manuelle Aufwand reduziert sich damit erheblich, so dass die Bedienbarkeit des Getränkebereiters insgesamt verbessert werden konnte. Der Flüssigkeitsbehälter kann praktisch mit einer Hand aus dem Getränkebereiter entnommen und wieder in diesen eingesetzt werden. Die bislang sehr aufwendige Einführung und Entnahme sowie die erforderliche regelmäßige Reinigung eines Schlauches entfällt vollständig. Sofern eine visuelle Sichtkontrolle des Füllstandes des Flüssigkeitsbehälters erfolgen soll, ist dies mit der Erfindung ebenfalls ohne Weiteres möglich.

Eine erste Ausgestaltung der Erfindung besteht darin, dass der Flüssigkeitsbehälter eine Kupplung aufweist, mittels der er von der Frontseite der geschlossenen Tür her in die korrespondierende Aufnahmevorrichtung der Tür einsetzbar ist.

Für die Ausführbarkeit dieses Lösungsvorschlages ist es grundsätzlich nicht von Bedeutung, ob die Kupplung am Flüssigkeitsbehälter selbst oder, wie es eine Weiterbildung der Erfindung vorsieht, an einem am Flüssigkeitsbehälter vorhandenen Deckel ausgebildet ist. Je nach Ausführung des Flüssigkeitsbehälters kann die eine oder andere Variante vorteilhaft sein. Von Bedeutung ist lediglich, dass die Kupplung passgenau und ohne erheblichen manuellen Aufwand in die korrespondierende Aufnahmevorrichtung einsetzbar ist. Durch die zwischen der Kupplung und der Aufnahmevorrichtung bestehende Verbindung bei eingesetztem Flüssigkeitsbehälter wird dieser am Getränkebereiter fixiert.

Zwischen der Kupplung und der Aufnahmevorrichtung kann gemäß einem weiterführenden Vorschlag der Erfindung eine Klemmverbindung, eine Schnappverbindung, eine elektromotorische, elektromagnetische, hydraulische oder pneumatische Fixierung gegeben sein. Die Auswahl eines der angegebenen Prinzipien für einen Getränkebereiter richtet sich beispielsweise nach den gegebenen Komfortansprüchen. Ein anderer Aspekt für eine geeignete Wahl ist selbstverständlich der erforderliche konstruktive Aufwand und damit die für die Herstellung erforderlichen Kosten.

Dementsprechend sieht eine sehr einfache Weiterbildung der Erfindung vor, dass die Aufnahmevorrichtung eine Führungsnut aufweist, in die die komplementär gestaltete Kupplung des Flüssigkeitsbehälters einschiebbar ist. Als Führungsnut kann jede geometrisch einfache Nut ebenso zum Einsatz kommen, wie beispielsweise eine Schwalbenschwanzführung zwischen Kupplung und Aufnahmevorrichtung. Maßgeblich ist hierbei sowohl die exakte sowie einfache Fixierung des Flüssigkeitsbehälters in der Aufnahmevorrichtung, als auch eine optisch ansprechende Gestaltung der Kupplung und der Aufnahmevorrichtung, sodass von dieser Verbindung möglichst wenig nach außen sichtbar wird.

Ein besonders vorteilhafter Vorschlag wird ferner darin gesehen, dass die Aufnahmevorrichtung eine in Einschubrichtung ansteigende Führungsnut und der Flüssigkeitsbehälter eine komplementäre Schrägfläche als Kupplung aufweist. Durch diese Maßnahme können sowohl an der Kupplung des Flüssigkeitsbehälters, als auch in der Aufnahmevorrichtung überwiegend glatte Oberflächen vorgesehen werden, was insbesondere hinsichtlich hygienischer Aspekte sinnvoll ist, da bekanntlich glatte Oberflächen einfacher zu reinigen sind, als stark strukturierte Flächen. Zudem besteht ein wesentlicher Vorteil darin, dass die Aufnahmevorrichtung, also die Führungsnut, von der Frontseite des Getränkebereiters nahezu überhaupt nicht sichtbar ist, was zu einem sehr harmonischen Gesamterscheinungsbild des in den Küchenschrank integrierten Getränkebereiters führt.

Neben den bereits beschriebenen, möglichst einfach ausgeführten mechanischen Verbindungen zwischen Kupplung und Aufnahmevorrichtung sieht eine andere Ausführung der Erfindung vor, dass die Kupplung wenigstens einen Magnet aufweist, der an der korrespondierenden, ferromagnetischen Aufnahmevorrichtung ansetzbar ist oder umgekehrt die Aufnahmevorrichtung mindestens einen Magnet aufweist, an dem die korrespondierende, ferromagnetische Kupplung ansetzbar ist. Eine magnetische Verbindung zwischen Kupplung und Aufnahmevorrichtung weist den entscheidenden Vorteil auf, dass hierbei die Magnete in die Oberfläche der Kupplung beziehungsweise der Aufnahmevorrichtung integriert werden können, sodass einfach zu reinigende Oberflächen gegeben sind. Zudem ist die Verbindung zwischen Kupplung und Aufnahmevorrichtung bei einer derartigen Variante sehr einfach zu handhaben.

Neben dem Umstand, dass der wenigstens eine Magnet ein Permanentmagnet sein kann, besteht eine sehr komfortable Weiterbildung der Erfindung darin, dass als Magnet ein Elektromagnet Verwendung findet. Der Flüssigkeitsbehälter lässt sich mit einem Elektromagneten praktisch auf "Knopfdruck" fixieren oder lösen. Ein Permanentmagnet hat hingegen den Vorteil, dass er unabhängig von elektrischer Energie funktioniert.

Der Getränkebereiter benötigt zur Entnahme der Flüssigkeit aus dem Flüssigkeitsbehälter ein Flüssigkeitsleitungssystem. Um die Verwendung der als nachteilig erkannten Schläuche zu vermeiden, wird daher vorgeschlagen, dass die Kupplung einen an einem korrespondierenden Flansch der Aufnahmevorrichtung ansetzbaren oder in diesen einsetzbaren Anschluss als Bestandteil eines Flüssigkeitsleitungssystems aufweist. Mit anderen Worten wird beim Einsetzen des Flüssigkeitsbehälters in die korrespondierende Aufnahmevorrichtung unmittelbar eine Verbindung zwischen dem die Flüssigkeit enthaltenden Innenraum des Flüssigkeitsbehälters mit einem korrespondierenden Anschluss im Getränkebereiter hergestellt. Es bedarf folglich keiner zusätzlichen manuellen Tätigkeiten, um die Entnahme der Flüssigkeit aus dem Flüssigkeitsbehälter zu gewährleisten. Zudem entfallen die bislang verwendeten, als nachteilig erkannten Schläuche zur Herstellung der Flüssigkeit leitenden Verbindung.

Zur Verbesserung der Handhabung des erfindungsgemäßen Getränkebereiters ist es zudem vorteilhaft, wenn die Aufnahmevorrichtung einen Endanschlag aufweist. Somit kann beim Einsetzen des Flüssigkeitsbehälters in die korrespondierende Aufnahmevorrichtung ein spürbares oder hörbares Signal erzeugt werden, dass dem Anwender das korrekte Einsetzen des Flüssigkeitsbehälters anzeigt.

Eine besonders einfache Ausführungsvariante eines derartigen Endanschlages kann beispielsweise in einer Feder-Kugel-Rastvorrichtung gesehen werden. Ebenso sind jedoch elastische Glieder jeglicher Art denkbar, die in eine korrespondierende Ausnehmung einrasten, wenn der Flüssigkeitsbehälter korrekt in den Getränkebereiter eingesetzt ist. Von Vorteil kann dabei zum Beispiel eine einfache Ausführung sein, bei der ein elastisches Kunststoffelement unmittelbar an der Aufnahmevorrichtung oder der Kupplung ausgebildet ist. Zusätzliche Anbauteile entfallen insbesondere bei dieser Lösung.

Für den optisch ansprechenden Gesamteindruck eines erfindungsgemäßen Getränkebereiters ist es ferner von Vorteil, wenn in der Tür eine Mulde oder Nische zum Einsetzen des Flüssigkeitsbehälters vorhanden ist. Auf diese Weise tritt der in den Getränkebereiter eingesetzte Flüssigkeitsbehälter nicht aus der Außenoberfläche des Küchenschrankes hervor. Die Mulde kann zudem in vorteilhafter Weise einen Ausgabebereich des Getränkebereiters bilden, in dem hier beispielsweise Ausgabedüsen angeordnet werden, die für die Abgabe der Getränke oder einzelner Bestandteile der Getränke zum Einsatz kommen. Um beim Beispiel eines Kaffeeautomaten als Getränkebereiter zu bleiben, können folglich in der Mulde Ausgabedüsen für Kaffee, Kaffeegetränke, Milch und/oder Wasser beziehungsweise Wasserdampf angeordnet sein.

Ein besonderer, erfindungsgemäßer Vorteil besteht dann, wenn der Flüssigkeitsbehälter hängend in die Aufnahmevorrichtung eingesetzt ist. Durch die hängende Aufnahme ist das Einsetzen und die Entnahme des Flüssigkeitsbehälters auf einfache Weise möglich. Zudem kann der unter dem Flüssigkeitsbehälter vorhandene Freiraum, der gemäß einem weiterführenden Vorschlag der Erfindung zwischen dem Boden des in die Aufnahmevorrichtung eingesetzten Flüssigkeitsbehälters und einem unterhalb des Flüssigkeitsbehälters in der Mulde vorhandenen Abtropfblech vorhanden ist, für andere Zwecke genutzt werden. Ein weiterer vorteilhafter Aspekt der hängenden Aufbewahrung des Flüssigkeitsbehälters ist darin zu sehen, dass das Abtropfblech durch den Flüssigkeitsbehälter keine mechanischen Beschädigungen, wie Kratzer oder Dellen erfährt.

Weiterhin wird gemäß einer anderen Ausführungsvariante der Erfindung vorgeschlagen, dass die Aufnahmevorrichtung aus einer um ein Gelenk schwenkbaren Hebemechanik besteht. Diese Hebemechanik ist vorzugsweise so ausgeführt, dass der in die geöffnete Hebemechanik eingeführte Flüssigkeitsbehälter mit samt der Hebemechanik angehoben und auf diese Weise eine Verbindung zwischen Kupplung und Aufnahmevorrichtung hergestellt wird.

Bei dieser elektromagnetischen oder mechanischen Variante der Aufnahmevorrichtung kann im einfachsten Fall ein Handhebel beziehungsweise ein Schaltknopf zur Betätigung der Hebemechanik dienen.

Zur Erleichterung der Herstellung der Verbindung zwischen Flüssigkeitsbehälter und korrespondierender Aufnahmevorrichtung ist es ferner von Vorteil, wenn die Aufnahmevorrichtung eine Beleuchtung aufweist. Diese Beleuchtung kann bevorzugt aus einer oder mehreren Licht emittierenden Dioden (LED) oder auch aus anderen Leuchtmitteln bestehen. Die Beleuchtung kann zudem mit einem Bewegungssensor kombiniert werden, so dass die Beleuchtung nur dann eingeschaltet ist, wenn der Flüssigkeitsbehälter an den Getränkebereiter angenähert wird. Eine nach Einführung des Flüssigkeitsbehälters in die korrespondierende Aufnahmevorrichtung abschaltbare Beleuchtung spart zudem Energiekosten.

Die Erfindung wird nachfolgend anhand der beigefügten Zeichnungen näher erläutert. Die gezeigten Ausführungsbeispiele stellen keine Einschränkung auf die dargestellten Varianten dar, sondern dienen lediglich der Erläuterung eines Prinzips der Erfindung. Dabei sind gleiche oder gleichartige Bauteile mit denselben Bezugsziffern bezeichnet. Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind.

Es zeigt
- Figur 1:: einen Längsschnitt durch einen Teil eines Küchenschrankes, in den ein Getränkebereiter eingesetzt ist,
- Figur 2:: eine Ausführungsvariante eines Flüssigkeitsbehälters als Einzelteil und in räumlicher Ansicht,
- Figur 3:: einen Schnitt im Bereich der Aufnahmevorrichtung bei eingesetztem Flüssigkeitsbehälter,
- Figur 4:: einen Deckel in einer speziellen Version als Einzelteil,
- Figur 5:: eine Explosivdarstellung mit Blick in einen Getränkebereiter,
- Figur 6:: ein Einzelteil einer Aufnahmevorrichtung,
- Figur 7:: eine weitere Ausführung eines Getränkebereiters mit einer geöffneten Hebevorrichtung
und
- Figur 8:: der Getränkebereiter aus Figur 7 mit einer geschlossenen Hebevorrichtung.

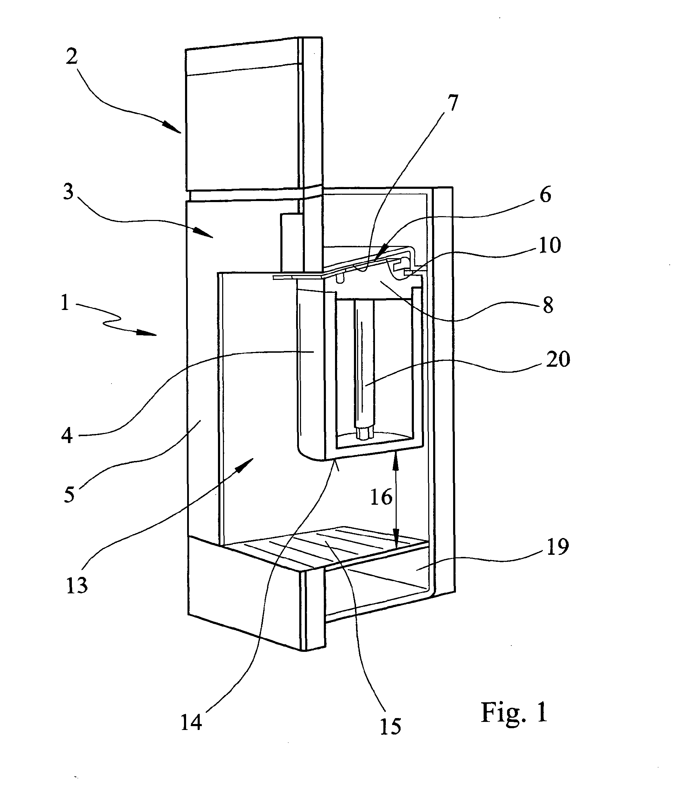

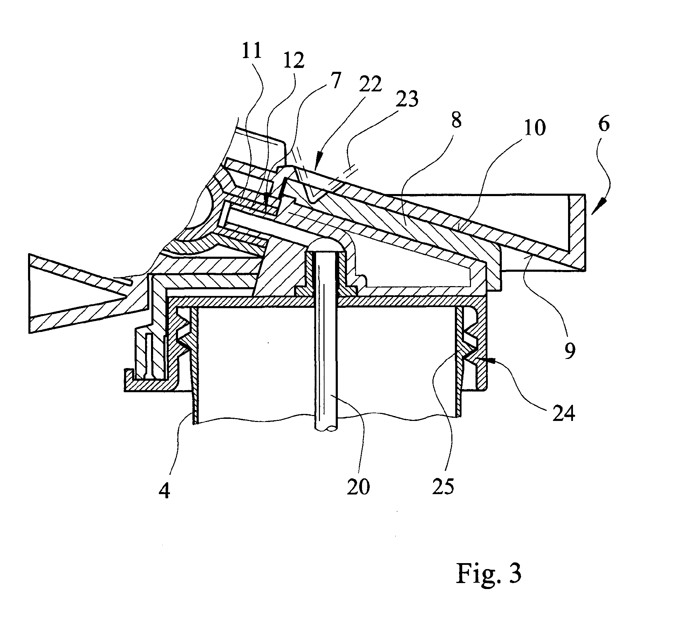

In der Figur 1 ist ausschnittsweise ein Längsschnitt durch einen Teil eines Küchenschrankes 2 dargestellt, in den ein Getränkebereiter 1 integriert ist. Der Getränkebereiter 1 weist eine Tür 3 auf. Durch Öffnen der Tür 3 sind die dahinter befindlichen und in der Figur 1 aus Vereinfachungsgründen nicht gezeigten Geräteteile und/oder Vorratsbehälter und/oder der Entsorgungsbereich zugänglich. Der Entsorgungsbereich ist damit von einem in der Tür 3 vorhandenen Bedien- und Ausgabebereich getrennt angeordnet. In der Tür 3 des Getränkebereiters 1 befindet sich ferner eine Mulde 13, die in die Tiefe der Tür 3 hinein verläuft und damit in der Frontseite 5 der Tür 3 eine Öffnung bildet. Das dargestellte Beispiel eines Getränkebereiters 1 bezieht sich auf einen Kaffeeautomaten, bei dem die Besonderheit besteht, dass neben der Abgabe des Kaffees auch Milch bereitgestellt werden muss, die mit dem Kaffee zusammengebracht oder aufgeschäumt werden kann, um beispielsweise einen Cappuccino oder Milchkaffee zu bereiten. Die Mulde 13 weist hierzu in ihrem oberen Abschnitt eine Aufnahmevorrichtung 6 auf, in die ein Flüssigkeitsbehälter 4 lösbar eingesetzt ist, der beispielsweise mit Milch befüllt sein kann. Neben dem Flüssigkeitsbehälter 4 können innerhalb der Mulde 13 weitere Armaturen angeordnet sein, die jedoch für die vorliegende Erfindung nicht von Bedeutung sind. Der in der Figur 1 dargestellte Flüssigkeitsbehälter 4 verfügt über einen Deckel 8 mit einer daran ausgebildeten Kupplung 7. Die Kupplung 7 besteht aus einer in Einschubrichtung ansteigenden Schrägfläche 10, die in die Aufnahmevorrichtung 6 eingeführt wird. Die Aufnahmevorrichtung 6 weist hierzu ihrerseits eine zu der Schrägfläche 10 komplementäre und in Einschubrichtung ansteigende Führungsnut 9 (siehe Figur 3) auf. Der Flüssigkeitsbehälter 4 ist auf diese Weise hängend in die Aufnahmevorrichtung 6 einsetzbar, was jedoch auch bedeutet, dass zwischen dem Boden 14 des eingehängten Flüssigkeitsbehälters 4 und einem den unteren Abschnitt der Mulde 13 bildenden Abtropfblech 15 ein Freiraum 16 verbleibt. Die hängende Befestigung des Flüssigkeitsbehälters 4 hat den Vorteil, dass Beschädigungen am Boden 14 des Flüssigkeitsbehälters 4 beziehungsweise am Abtropfblech 15 vermieden werden und zudem die Reinigung erleichtert wird. Unterhalb des Abtropfbleches 15 dient ein Hohlraum 19 beispielsweise mit einer Auffangwanne zum Auffangen verschütteter, überschüssiger oder übergelaufener Flüssigkeit.

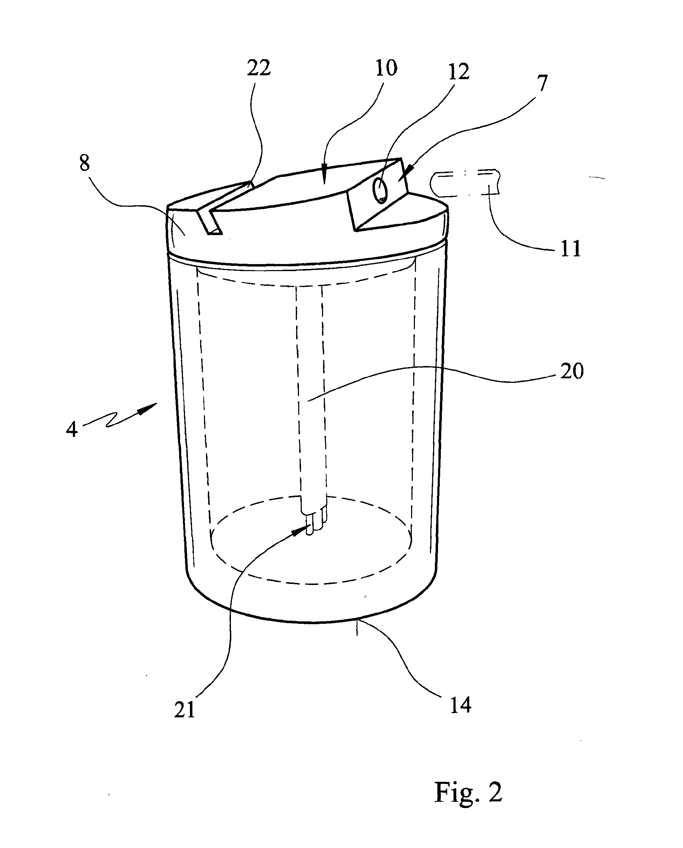

Aus der Figur 2 geht als Einzelteildarstellung ein Flüssigkeitsbehälter 4 hervor, wie er in eine Aufnahmevorrichtung 6 gemäß Figur 1 einsetzbar ist. Die Besonderheit dieses Flüssigkeitsbehälters 4 besteht darin, dass er einen Deckel 8 aufweist, der an seiner freien Oberseite mit einer Schrägfläche 10 ausgestattet ist. Ein Schlitz 22 bzw. eine Kerbe in der Oberfläche des Deckels 8 bildet zudem einen Bestandteil einer Rastiervorrichtung, die das korrekte Einsetzen des Flüssigkeitsbehälter 4 in die Aufnahmevorrichtung 6 erleichtert. In Einschubrichtung betrachtet ist an der Frontseite des Deckels 8 ferner ein Anschluss 12 vorhanden, der dichtend und passgenau mit einem korrespondierenden und in der Figur 2 nur andeutungsweise gezeichneten Flansch 11 in Eingriff gebracht werden kann. Sowohl der Flansch 11, als auch der Anschluss 12 sind damit Bestandteile eines Flüssigkeitsleitungssystems des Getränkebereiters 1. Im Innenraum des Flüssigkeitsbehälters 4 ist ferner eine Steigleitung 20 vorhanden, durch die Flüssigkeit aus dem Behälter angesaugt werden kann, wobei an der Steigleitung 20 Füllstandssensoren 21 vorhanden sind, die ein Signal abgeben, wenn der Flüssigkeitsbehälter 4 nicht mehr ausreichend mit Flüssigkeit befüllt ist.

Die Figur 3 zeigt eine Schnittdarstellung im Bereich der Aufnahmevorrichtung 6 bei eingesetztem Flüssigkeitsbehälter 4. Der Flüssigkeitsbehälter 4 verfügt in seinem oberen, deckelnahen Bereich über ein Außengewinde 25, dass der Befestigung des Deckels 8 über ein in dem Deckel 8 ausgebildetes, korrespondierendes Innengewinde 24 dient. Die im Flüssigkeitsbehälter 4 vorhandene Steigleitung 20 mündet unmittelbar in den Anschluss 12, der seinerseits dichtend in den Flansch 11 der Aufnahmevorrichtung 6 eingepasst ist (siehe auch Figur 3). Der Anschluss 12 bildet einen Bestandteil der Kupplung 7, zu der auch die an dem Deckel 8 ausgebildete Schrägfläche 10 zählt. Innerhalb der Schrägfläche ist 10 ferner ein Schlitz 22 vorhanden, in den eine Feder 23 eingreift, wodurch ein Endanschlag in Form einer Rastiervorrichtung gebildet wird. Die Feder 23 wurde in der Figur 3 durch gestrichelte Linien nur andeutungsweise dargestellt. Alternativ kann die Rastierung auch mit Kugel-Federelementen ausgebildet werden. Der Zeichnung ist auch entnehmbar, dass die Schrägfläche 10 des Deckels 8 in der Führungsnut 9 der Aufnahmevorrichtung 6 aufgenommen und in dieser geführt ist.

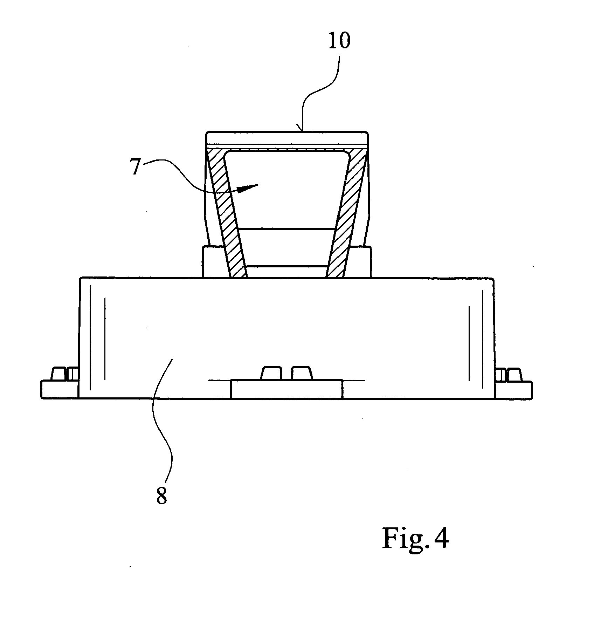

Ein Deckel 8 in einer speziellen Version geht als Einzelteildarstellung aus der Figur 4 hervor. Dieser Deckel 8 verfügt über eine Schrägfläche 10, die jedoch nicht, wie im vorherigen Beispiel die gesamte Deckeloberfläche ausmacht, sondern nur in einem Abschnitt des Deckels 8 ausgebildet ist. Die in Einschubrichtung frontseitig angedeutete Kupplung 7 dient der Verbindung mit der korrespondierenden Aufnahmevorrichtung 6 sowie durch den darin ausgebildeten Hohlraum zur Aufnahme der Steigleitung 20 beziehungsweise des Anschlusses 12, die hier jedoch nicht gezeigt sind.

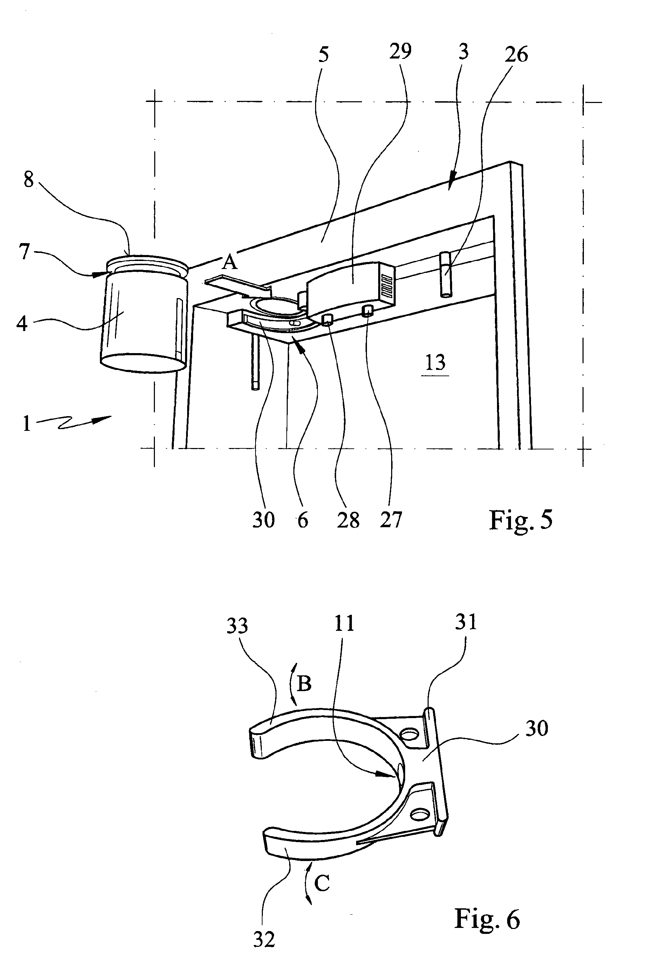

Die Explosivdarstellung in Figur 5 veranschaulicht eine weitere Ausführungsvariante eines Getränkebereiters 1, in dessen Tür 3 eine Mulde 13 ausgebildet ist. Der Vorteil der in der Tür 3 ausgebildeten Mulde 13 besteht darin, dass keine über die Frontseite 5 der Tür 3 vorstehenden Teile vorhanden sind und damit eine insgesamt harmonische Integration des Getränkebereiters 1 in den Küchenschrank 2 erfolgt. Die Mulde 13 weist in ihrem oberen Bereich mehrere Ausgabedüsen 26, 27 und 28 auf, aus denen verschiedene Getränke oder Getränkebestandteile entnommen oder abgegeben werden können. Die Ausgabedüsen 27 und 28 sind ferner Bestandteile einer gemeinsamen Ausgabeeinheit 29. Seitlich der Ausgabeeinheit 29 befindet sich die Aufnahmevorrichtung 6 für den Flüssigkeitsbehälter 4. Diese Aufnahmevorrichtung 6 besteht hierbei aus einer Klemmschelle 30, in die der Flüssigkeitsbehälter 4 in Richtung des Pfeils "A" eingesetzt werden kann. Zur sicheren Verbindung zwischen Flüssigkeitsbehälter 4 und Aufnahmevorrichtung 6 ist an dem Deckel 8 des Flüssigkeitsbehälters 4 eine Kupplung 7 in Form einer umlaufenden Ringnut ausgebildet, in die die Klemmschelle 30 unter elastischer Verformung eingreift, wenn der Flüssigkeitsbehälter 4 in die Aufnahmevorrichtung 6 eingesetzt ist.

Wie darüber hinaus aus der Einzelteildarstellung in Figur 6 hervorgeht, verfügt die Klemmschelle 30 der Aufnahmevorrichtung 6 über einen zentralen Befestigungsflansch 31 zur Befestigung der Klemmschelle 30, von dem aus sich zwei, der Form des Flüssigkeitsbehälters 4 angepasste Arme 32 und 33 erstrecken, die in Richtung der Pfeile "B" und "C" elastisch verformbar sind. Zwischen den Armen 32, 33 ist der Flansch 11 zur Verbindung mit dem Anschluss 12 der Kupplung 7 an einem nicht gezeigten Flüssigkeitsbehälter 4 vorhanden.

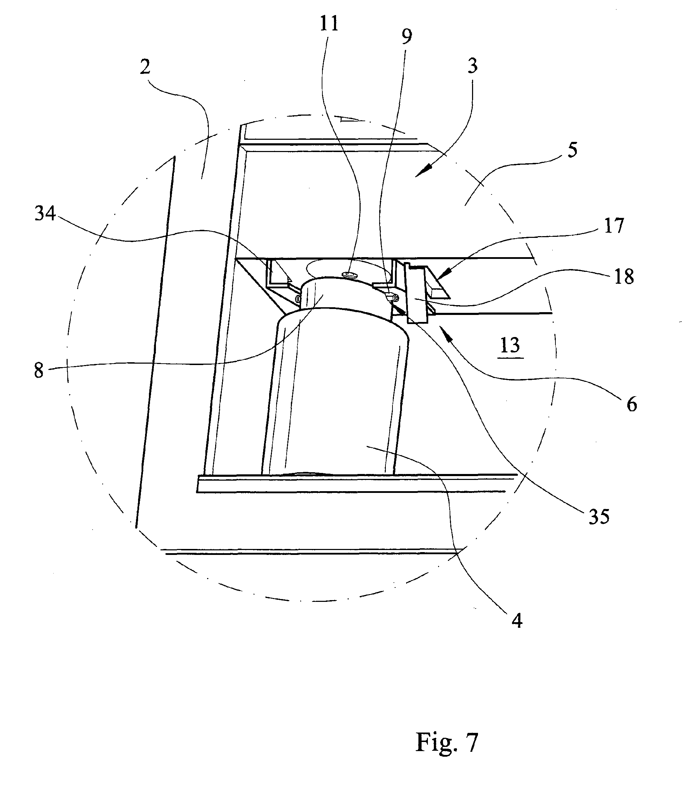

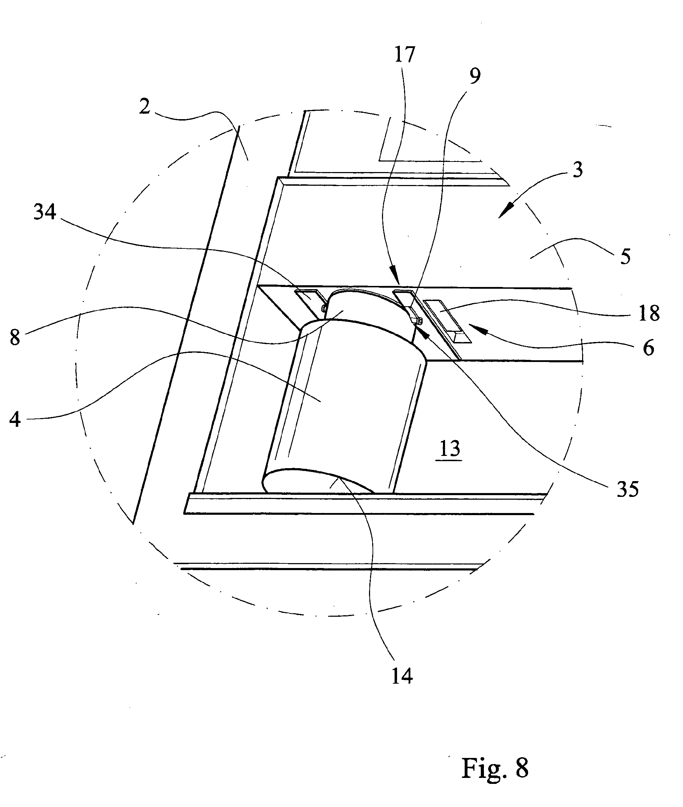

Aus den Figuren 7 und 8 geht eine spezielle Ausführung der Aufnahme des Flüssigkeitsbehälters 4 in der Aufnahmevorrichtung 6 hervor. Die Aufnahmevorrichtung 6 ist bei dieser Variante eines erfindungsgemäßen Getränkebereiters 1 als Hebemechanik 17 ausgeführt, die einen Handhebel 18 aufweist. Der Handhebel 18 dient dem Heben und Senken einer zangenartig und im Querschnitt L-förmig ausgebildeten Hebeplatte 34, die beidseitig des Flüssigkeitsbehälters 4 über je eine Senke 35 verfügt, in die am Deckel 8 des Flüssigkeitsbehälters 4 angeformte Zapfen eingreifen, wenn der Flüssigkeitsbehälter 4 in die Aufnahmevorrichtung 6 eingesetzt ist. Anstelle der Zapfen kann der Deckel 8 des Flüssigkeitsbehälters 4 auch eine Aufnahmenut aufweisen, in die die zangenartig ausgebildete Hebeplatte 34 eingreift. Der Flansch 11 der Aufnahmevorrichtung 6 ist bei dieser Lösung so angeordnet, dass der Anschluss 12 des Flüssigkeitsbehälters 4 mittig an der Oberseite des Deckels 8 ausgebildet ist.

### Bezugszeichenliste:

- 1.: Getränkebereiter
- 2.: Küchenschrank
- 3.: Tür
- 4.: Flüssigkeitsbehälter
- 5.: Frontseite der Tür
- 6.: Aufnahmevorrichtung
- 7.: Kupplung
- 8.: Deckel
- 9.: Führungsnut
- 10.: Schrägfläche
- 11.: Flansch
- 12.: Anschluss
- 13.: Mulde
- 14.: Boden
- 15.: Abtropfblech
- 16.: Freiraum
- 17.: Hebemechanik
- 18.: Handhebel
- 19.: Hohlraum
- 20.: Steigleitung
- 21.: Füllstandssensoren
- 22.: Schlitz
- 23.: Feder
- 24.: Innengewinde
- 25.: Außengewinde
- 26.: Ausgabedüse

### Fortsetzung Bezugszeichenliste:

- 27.: Ausgabedüse
- 28.: Ausgabedüse
- 29.: Ausgaeeinheit
- 30.: Klemmschelle
- 31.: Befestigungsflansch
- 32.: Arm
- 33.: Arm
- 34.: Hebeplatte
- 35.: Senke

## Patentansprüche

1. Getränkebereiter (1) als Einbaugerät in einem Küchenschrank (2), wobei der Getränkebereiter (1) eine Tür (3) aufweist, in die ein nach außen sichtbarer Flüssigkeitsbehälter (4) lösbar eingesetzt ist,
wobei in die Frontseite (5) der Tür (3) des Getränkebereiters (1) eine Aufnahmevorrichtung (6) zum Einsetzen des Flüssigkeitsbehälters (4) integriert ist,
**dadurch gekennzeichnet, dass**
der Flüssigkeitsbehälter (4) eine Kupplung (7) aufweist, mittels der er von der Frontseite (5) der geschlossenen Tür (3) in die korrespondierende Aufnahmevorrichtung (6) der Tür (3) einsetzbar ist, derart, dass die zwischen der Kupplung (7) und der Aufnahmevorrichtung (6) bestehende Verbindung den Flüssigkeitsbehälter (4) am Getränkebereiter (1) fixiert.

2. Getränkebereiter nach Anspruch 1,
**dadurch gekennzeichnet, dass**
der Flüssigkeitsbehälter (4) einen Deckel (8) aufweist, an dem die Kupplung (7) ausgebildet ist.

3. Getränkebereiter nach Anspruch 2,
**dadurch gekennzeichnet, dass**
zwischen der Kupplung (7) und der Aufnahmevorrichtung (6) eine Klemmverbindung, eine Schnappverbindung, eine elektromotorische, elektromagnetische, hydraulische oder pneumatische Fixierung gegeben ist.

4. Getränkebereiter nach einem der Ansprüche 2 bis 3,
**dadurch gekennzeichnet, dass**
die Aufnahmevorrichtung (6) eine Führungsnut (9) aufweist, in die die komplementär gestaltete Kupplung (7) des Flüssigkeitsbehälters (4) einschiebbar ist.

5. Getränkebereiter nach einem der Ansprüche 2 bis 4,
**dadurch gekennzeichnet, dass**
die Aufnahmevorrichtung (6) eine in Einschubrichtung ansteigende Führungsnut (9) und der Flüssigkeitsbehälter (4) eine komplementäre Schrägfläche (10) als Kupplung (7) aufweist.

6. Getränkebereiter nach einem der Ansprüche 2 bis 5,
**dadurch gekennzeichnet, dass**
die Kupplung (7) wenigstens einen Magnet aufweist, der an der korrespondierenden, ferromagnetischen Aufnahmevorrichtung (6) ansetzbar ist oder die Aufnahmevorrichtung (6) mindestens einen Magnet aufweist, an dem die korrespondierende, ferromagnetische Kupplung (7) ansetzbar ist.

7. Getränkebereiter nach Anspruch 6,
**dadurch gekennzeichnet, dass**
der wenigstens eine Magnet ein Permanentmagnet oder ein Elektromagnet ist.

8. Getränkebereiter nach einem der Ansprüche 2 bis 7,
**dadurch gekennzeichnet, dass**
die Kupplung (7) einen an einem korrespondierenden Flansch (11) der Aufnahmevorrichtung (6) ansetzbaren oder in diesen einsetzbaren Anschluss (12) als Bestandteil eines Flüssigkeitsleitungssystems aufweist.

9. Getränkebereiter nach einem der vorstehend genannten Ansprüche,
**dadurch gekennzeichnet, dass**
die Aufnahmevorrichtung (6) einen Endanschlag aufweist.

10. Getränkebereiter nach Anspruch 9,
**dadurch gekennzeichnet, dass**
der Endanschlag durch ein elastisches, beim Einsetzen des Flüssigkeitsbehälters in eine korrespondierende Ausnehmung einrückendes Glied oder eine Feder-Kugel-Rastvorrichtung gebildet ist.

11. Getränkebereiter nach einem der vorstehend genannten Ansprüche,
**dadurch gekennzeichnet, dass**
in der Tür (3) eine Mulde (13) zum Einsetzen des Flüssigkeitsbehälters (4) vorhanden ist.

12. Getränkebereiter nach einem der vorstehend genannten Ansprüche,
**dadurch gekennzeichnet, dass**
der Flüssigkeitsbehälter (4) hängend in die Aufnahmevorrichtung eingesetzt ist.

13. Getränkebereiter nach Anspruch 12,
**dadurch gekennzeichnet, dass**
zwischen dem Boden (14) des in die Aufnahmevorrichtung (6) eingesetzten Flüssigkeitsbehälters (4) und einem unterhalb des Flüssigkeitsbehälters (4) in der Mulde (13) vorhandenen Abtropfblech (15) ein Freiraum (16) vorhanden ist.

14. Getränkebereiter nach einem der vorstehend genannten Ansprüche,
**dadurch gekennzeichnet, dass**
die Aufnahmevorrichtung (6) aus einer um ein Gelenk schwenkbaren Hebemechanik (17) besteht.

15. Getränkebereiter nach Anspruch 14,
**dadurch gekennzeichnet, dass**
die Hebemechanik (17) einen Handhebel (18) aufweist.

16. Getränkebereiter nach einem der vorstehend genannten Ansprüche,
**dadurch gekennzeichnet, dass**
die Aufnahmevorrichtung (6) eine Beleuchtung aufweist.

17. Getränkebereiter nach Anspruch 16,
**dadurch gekennzeichnet, dass**
die Beleuchtung mit einem Bewegungssensor kombiniert ist und/oder bei eingesetztem Flüssigkeitsbehälter (4) automatisch abschaltend ausgeführt ist.

## Claims

1. Beverage maker (1) as a built-in appliance in a kitchen cupboard (2), the beverage maker (1) comprising a door (3), into which a liquid container (4) which is visible from the outside is detachably inserted, a receiving device (6) for the insertion of the liquid container (4) being integrated into the front face (5) of the door (3) of the beverage maker (1), **characterised in that** the liquid container (4) comprises a coupling (7), by means of which it can be inserted into the corresponding receiving device (6) of the door (3) from the front face (5) of the closed door (3), such that the connection between the coupling (7) and the receiving device (6) fixes the liquid container (4) to the beverage maker (1).

2. Beverage maker according to claim 1, **characterised in that** the liquid container (4) comprises a lid (8), on which the coupling (7) is formed.

3. Beverage maker according to claim 2, **characterised in that** a clamping connection, a snap connection, an electromotive, electromagnetic, hydraulic or pneumatic fixing is provided between the coupling (7) and the receiving device (6).

4. Beverage maker according to either claim 2 or claim 3, **characterised in that** the receiving device (6) comprises a guide groove (9), into which the coupling (7), of complementary shape, of the liquid container (4) can be pushed.

5. Beverage maker according to any of claims 2 to 4, **characterised in that** the receiving device (6) comprises a guide groove (9) which rises in the push-in direction, and the liquid container (4) has a complementary bevel (10) as a coupling (7).

6. Beverage maker according to any of claims 2 to 5, **characterised in that** the coupling (7) comprises at least one magnet, which can be positioned on the corresponding, ferromagnetic receiving device (6), or the receiving device (6) comprises at least one magnet on which the corresponding, ferromagnetic coupling (7) can be positioned.

7. Beverage maker according to claim 6, **characterised in that** the at least one magnet is a permanent magnet or an electromagnet.

8. Beverage maker according to any of claims 2 to 7, **characterised in that** the coupling (7) comprises a connection (12), which can be positioned on a corresponding flange (11) of the receiving device (6) or can be inserted therein, as a component of a liquid-conducting system.

9. Beverage maker according to any of the preceding claims, **characterised in that** the receiving device (6) comprises an end stop.

10. Beverage maker according to claim 9, **characterised in that** the end stop is formed by a resilient member, which engages in a corresponding recess when the liquid container is inserted, or by a spring-ball locking device.

11. Beverage maker according to any of the preceding claims, **characterised in that**, in the door (3), there is a cavity (13) for inserting the liquid container (4).

12. Beverage maker according to any of the preceding claims, **characterised in that** the liquid container (4) is inserted into the receiving device so as to be suspended.

13. Beverage maker according to claim 12, **characterised in that** there is a clearance (16) between the base (14) of the liquid container (4) inserted into the receiving device (6) and a drip plate (15) which is below the liquid container (4) in the cavity (13).

14. Beverage maker according to any of the preceding claims, **characterised in that** the receiving device (6) consists of a lifting mechanism (17) which is pivotable about a joint.

15. Beverage maker according to claim 14, **characterised in that** the lifting mechanism (17) comprises a hand lever (18).

16. Beverage maker according to any of the preceding claims, **characterised in that** the receiving device (6) comprises lighting.

17. Beverage maker according to claim 16, **characterised in that** the lighting is combined with a movement sensor and/or is configured to automatically switch off when the liquid container (4) is inserted.

## Revendications

1. Préparateur de boissons (1) en tant qu'appareil encastrable dans un placard de cuisine (2), le préparateur de boissons (1) présentant une porte (3) dans laquelle peut être inséré de façon amovible un réservoir de liquide (4) visible de l'extérieur,
un dispositif de réception (6) pour l'insertion du réservoir de liquide (4) étant intégré dans la face frontale (5) de la porte (3) du préparateur de boissons (1),
**caractérisé en ce que**
le réservoir de liquide (4) présente un accouplement (7) au moyen duquel il peut être inséré dans le dispositif de réception (6) correspondant de la porte (3) par la face frontale (5) de la porte (3) fermée de telle sorte que le raccordement existant entre l'accouplement (7) et le dispositif de réception (6) fixe le réservoir de liquide (4) sur le préparateur de boissons (1).

2. Préparateur de boissons selon la revendication 1,
**caractérisé en ce que**
le réservoir de liquide (4) présente un couvercle (8) sur lequel est constitué l'accouplement (7).

3. Préparateur de boissons selon la revendication 2,
**caractérisé en ce que**,
entre l'accouplement (7) et le dispositif de réception (6), il existe un raccordement par serrage, un raccordement par encliquetage, une fixation électromotrice, électromagnétique, hydraulique ou pneumatique.

4. Préparateur de boissons selon une des revendications 2 à 3,
**caractérisé en ce que**
le dispositif de réception (6) présente une rainure de guidage (9) dans laquelle peut être introduit l'accouplement (7), de forme complémentaire, du réservoir de liquide (4).

5. Préparateur de boissons selon une des revendications 2 à 4,
**caractérisé en ce que**
le dispositif de réception (6) présente une rainure de guidage (9) montant dans le sens d'introduction, et **en ce que** le réservoir de liquide (4) présente une surface oblique (10) complémentaire en tant qu'accouplement (7).

6. Préparateur de boissons selon une des revendications 2 à 5,
**caractérisé en ce que**
l'accouplement (7) présente au moins un aimant qui peut être mis en place sur le dispositif de réception (6) ferromagnétique correspondant, ou **en ce que** le dispositif de réception (6) présente au moins un aimant sur lequel peut être mis en place l'accouplement (7) ferromagnétique correspondant.

7. Préparateur de boissons selon la revendication 6,
**caractérisé en ce que**
l'aimant au moins au nombre de un est un aimant permanent ou un électroaimant.

8. Préparateur de boissons selon une des revendications 2 à 7,
**caractérisé en ce que**
l'accouplement (7) présente, en tant que composant d'un système de conduite de liquide, un raccordement (12) pouvant être mis en place sur une bride (11) correspondante du dispositif de réception (6) ou pouvant être inséré dans cette bride.

9. Préparateur de boissons selon une des revendications citées précédemment, **caractérisé en ce que**
le dispositif de réception (6) présente une butée d'extrémité.

10. Préparateur de boissons selon la revendication 9,
**caractérisé en ce que**
la butée d'extrémité est formée par un organe élastique rentrant dans un logement correspondant lors de l'insertion du réservoir de liquide ou par un dispositif d'encliquetage par ressort et rotule.

11. Préparateur de boissons selon une des revendications citées précédemment, **caractérisé en ce que**,
dans la porte (3), il y a un creux (13) pour l'insertion du réservoir de liquide (4).

12. Préparateur de boissons selon une des revendications citées précédemment,
**caractérisé en ce que**
le réservoir de liquide (4) est inséré en suspension dans le dispositif de réception.

13. Préparateur de boissons selon la revendication 12,
**caractérisé en ce que**,
entre le fond (14) du réservoir de liquide (4) inséré dans le dispositif de réception (6) et une tôle d'égouttage (15) présente au-dessous du réservoir de liquide (4) dans le creux (13), il y a un espace libre (16).

14. Préparateur de boissons selon une des revendications citées précédemment,
**caractérisé en ce que**
le dispositif de réception (6) se compose d'un mécanisme de levage (17) pivotant autour d'une articulation.

15. Préparateur de boissons selon la revendication 14,
**caractérisé en ce que**
le mécanisme de levage (17) présente un levier manuel (18).

16. Préparateur de boissons selon une des revendications citées précédemment,
**caractérisé en ce que**
le dispositif de réception (6) présente un éclairage.

17. Préparateur de boissons selon la revendication 16,
**caractérisé en ce que**
l'éclairage est combiné avec un détecteur de mouvement et/ou est exécuté avec une coupure automatique lorsque le réservoir de liquide (4) est inséré.
